# EUROPEAN PATENT SPECIFICATION

(11) **EP 4 343 187 B1**
(45) Date of publication and mention of the grant of the patent: **24.09.2025**
(21) Application number: 24156474.9
(22) Date of filing: 08.04.2019
(51) Int. Cl.: G05D 7/01, F16K 31/12, F16K 31/64, G05D 23/01, F16K 17/30

(54) **A CONTROL VALVE FOR HEAT REGULATION**
REGELVENTIL ZUR WÄRMEREGELUNG
SOUPAPE DE COMMANDE POUR LA RÉGULATION DE LA CHALEUR

(30) Priority: 09.04.2018 SE 1850398
(43) Date of publication of application: 27.03.2024
(62) Divisional of application: 19784879.9
(73) Proprietor: Purmo Group Sweden AB, 285 21 Markaryd (SE)
(72) Inventor: Arvidsson, Thomas, 34135 Ljungby (SE)
(74) Representative: Bergenstråhle & Partners AB

(56) References cited:
- EP-A1- 2 693 287
- JP-A- H0 340 011
- JP-U- S60 184 475

## Description

### Field of the invention

The present disclosure relates to a control valve for heat regulation, comprising a housing with a fluid inlet and a fluid outlet. The control valve has a first valve arrangement, comprising a first valve member and a first valve seat, regulating a fluid flow based on a thermostat setting. Further the control valve has a second valve arrangement, comprising a second valve member and a second valve seat, regulating a fluid flow based on a fluid pressure difference between the fluid inlet and the fluid outlet.

### Technical background

Such a control valve is disclosed for instance in EP-2894536-A1. A control valve that is capable of compensating for varying fluid pressure differences may provide a more accurate control of the fluid flow to obtain for instance a desired room temperature with better accuracy.

One problem associated with control valves of this kind is to provide more precise control of the fluid flow in correspondence with the pressure difference over the control valve.

Another control valve is disclosed in JP S60 184475 U which comprises a control valve with a first and second valve arrangement. The first valve arrangement comprises a first valve member which has a first valve seat, and which regulates fluid flow based on a thermostat setting. The second valve arrangement comprises a second valve member which has a second valve seat, and which regulates fluid flow based on a fluid pressure difference between a fluid inlet and a fluid outlet and where the second valve member is biased against the flow direction by a control spring. Similar solutions are known from EP 2 693 287 A1 which comprises a first valve means, and a second valve means, wherein one is a pressure regulating valve and the other is a flow control valve. Also, JP H03 40011 A concerns a similar solution.

### Summary of the invention

One object of the present disclosure is therefore to provide a control valve that is capable of accurate control based on the pressure differential over the control valve. This object is achieved by means of a control valve defined as in claim 1. More specifically, in a control valve of the initially mentioned kind, the second valve seat is ring-shaped, and the second valve member reaches through the second valve seat against the flow direction, such that an increase in said fluid pressure differential causes the second valve member to move in said flow direction towards the second valve seat, thereby constricting the fluid flow. This means that the second valve member may reach into the space constituting the inlet of the control valve such that the end of the second valve member senses the inlet fluid pressure very accurately. This gives an improved reading of the inlet pressure compared to other solutions, such as the one where the inlet pressure is conveyed with a narrow bypass channel to provide a reading of the inlet pressure. The first valve arrangement may be arranged downstream of the second valve arrangement in a flow direction from the control valve inlet to the outlet. This means that the first valve arrangement carrying out temperature control operates on flow already pressure-compensated.

The second valve member may be urged against the flow direction from the fluid inlet to the fluid outlet by means of a pressure control spring, which is located on the opposite side of the first valve arrangement as seen from the second valve arrangement. This results in a compact control valve as compared to control valves where the pressure control function is devised as a separate unit.

The first valve member may be urged away from the first valve seat by means of a helical return spring, which is concentric with the pressure control spring. The pressure control spring may enclose the helical return spring. This results in a very compact arrangement.

The second valve seat may be configured to move with the first valve member. This makes the valve effective over a wider range of operating conditions as the second valve arrangement is at least partly compensated for the increased flow caused by the first valve arrangement. The second valve seat may be made as a single piece with the first valve member, although it may optionally comprise multiple assembled parts. The second valve seat may move in a bore in the housing.

A movement of the first valve member towards the first valve seat may loosen the pressure control spring, which also provides for a wide range of functional operating conditions.

The first valve seat may be formed by a part of the housing.

A rolling membrane or diaphragm may connect the first valve member to the second valve member.

The first valve member may comprise a collar portion, enclosing the outer periphery of the first valve seat. This allows the outlet from the first valve arrangement to include a gradually increasing flow area which may reduce noise.

A leak channel may be provided in between the second valve member and the second valve seat, such that a minimum flow is maintained in the closed position of the second valve arrangement.

There is also considered a control valve for heat regulation comprising a housing with a fluid inlet and a fluid outlet, a first valve arrangement, comprising a first valve member and a first valve seat, regulating a fluid flow based on a thermostat setting, and a second valve arrangement, comprising a second valve member and a second valve seat, regulating a fluid flow based on a fluid pressure difference between the fluid inlet and the fluid outlet. The first valve member may be connected to the second seat, such that a movement of the first valve member that increases the fluid flow causes the second seat to move in a direction increasing the fluid flow. This makes the valve operative over a wider range of operating conditions as the second valve arrangement is at least partly compensated for an increased flow caused by the first valve arrangement opening.

The first valve member may be connected to a pressure control spring urging the second valve member towards an open position, such that a movement of the first valve member that increases the fluid flow causes the pressure control spring to become more biased by limiting the movement of the pressure control spring. This is accomplished by a membrane connecting the first valve member to the second valve member. This reduces the stroke of the second valve member if the first valve arrangement is fully opened.

The second valve seat may be in one piece with or assembled with the first valve member or parts thereof to form a rigid unit.

The second valve seat may be ring-shaped, and the second valve member may project through the valve seat with a distal end thereof.

The second valve member may be configured to be unable to follow the second seat at a threshold opening of the first valve arrangement, such that a fully open first valve arrangement causes the second valve arrangement to open. This serves to flush the control valve as a whole. If for instance dirt is trapped in either the first or second valve arrangement significantly constricting flow, the room will become cold, thereby causing the thermostats to open both valve arrangement, thereby flushing dirt out of the control valve.

A control valve for heat regulation, which is not part of the invention, comprising a housing with a fluid inlet and a fluid outlet, a first valve arrangement, comprising a first valve member and a first valve seat, regulating a fluid flow based on a thermostat setting and a second valve arrangement, comprising a second valve member and a second valve seat, regulating a fluid flow based on a fluid pressure difference between the fluid inlet and the fluid outlet. The second valve member may be urged against a flow direction from the fluid inlet to the fluid outlet by means of a pressure control spring, and the second valve member may be made more biased by a movement of the first valve member that constricts the flow between the first valve member and the first valve seat. This may be arranged by means of a rolling diaphragm that connects the first valve member to the second valve member. This opens the second valve arrangement as the first valve arrangement is close to be shut off, such that the first valve arrangement can control the flow more independently.

Further, a control valve for heat regulation, which is not part of the invention, comprising a housing with a fluid inlet and a fluid outlet, a first valve arrangement, comprising a first valve member and a first valve seat, regulating a fluid flow based on a thermostat setting and a second valve arrangement, comprising a second valve member and a second valve seat, regulating a fluid flow based on a fluid pressure difference between the fluid inlet and the fluid outlet. The first and second valve members are concentrically arranged, the first valve member being controlled by a pin in the center of the concentric arrangement, and the second valve member being radially surrounded by the first valve member. The second valve member is connected to a pressure control spring surrounding the pin, a connector part connecting the pin with the first valve member. An interconnecting piece connects the pressure control spring and the second valve member, wherein either of the connector part and the interconnecting piece reaches through the other. This provides a compact arrangement where the thermostat-connected valve arrangement can be arranged downstream of the pressure-controlled valve arrangement. At the same time, the pin intended to be controlled by a thermostat can be centrally arranged to be compatible with legacy type thermostats. For instance, a plurality of legs of the interconnecting piece may reach through openings in the connector part to provide such an arrangement.

Further, a control valve for heat regulation, which is not part of the invention, comprising a housing with a fluid inlet and a fluid outlet, a first valve arrangement, comprising a first valve member and a first valve seat, regulating a fluid flow based on a thermostat setting and a second valve arrangement, comprising a second valve member and a second valve seat, regulating a fluid flow based on a fluid pressure difference between the fluid inlet and the fluid outlet. The first valve member and the first valve seat are circular and concentric, and the first valve member comprises a collar portion which encloses the first valve seat radially outwards. This has been shown to provide a more silent control valve.

### Brief description of the drawings

Fig 1 illustrates a cross-section of a control valve where a temperature-controlled valve arrangement is shut off.
Fig 2 illustrates the corresponding cross section where the temperature-controlled valve arrangement is opened.
Fig 3 illustrates the corresponding cross section as in fig 2 where the temperature-controlled valve arrangement remains open, but where the flow is reduced by a pressure differential-controlled valve arrangement.
Fig 4 shows an enlarged portion A of fig 2.
Fig 5 shows a perspective exploded view of the pieces making up the first valve member and the second valve seat.
Fig 6 shows a perspective exploded view of the piece making up the second valve member.
Fig 7 shows a front view of a second connector part, along its axial direction.
Fig 8 shows a simplified cross section through connecting parts of the first and second valve members.

### Detailed description

The present disclosure relates to a control valve typically for a heating system. When used in a heating system, the control valve controls the flow of a fluid, such as hot water, to a radiator in order to control the amount of heat the radiator emits to the room where it is located. Typically, a thermostat may be connected to the control valve to sense the room temperature and change the flow through the control valve accordingly by changing a flow area therein.

It has been proposed to introduce a differential pressure regulator functionality in such a control valve. This is done for instance to compensate for different pressures experienced in different parts of a heating system. In a hydronic system for residential buildings, it is common that the differential water pressure between flow pipes and return pipes will vary a lot, both between different locations and over time at a given location. The latter may be caused by varying heat demand at a location in a building. For instance, one part of a building being temporarily exposed to sunlight temporarily raises the pressure differential at other locations in the building. This has to some extent been compensated for by using dedicated pressure control units at various locations in a heating system.

Optimally, a control valve with a differential pressure regulator functionality would give the same flow for a given temperature differential within a broad range of different pressure drops. By a temperature differential is here meant a difference between an actual room temperature and a desired room temperature as set with a thermostat. If such a control valve can be achieved, even if operating in an improved manner rather than optimally, better room comfort and increased energy efficiency can be achieved. Further, some dedicated pressure control units otherwise used in the heating system could in principle be spared, which saves costs.

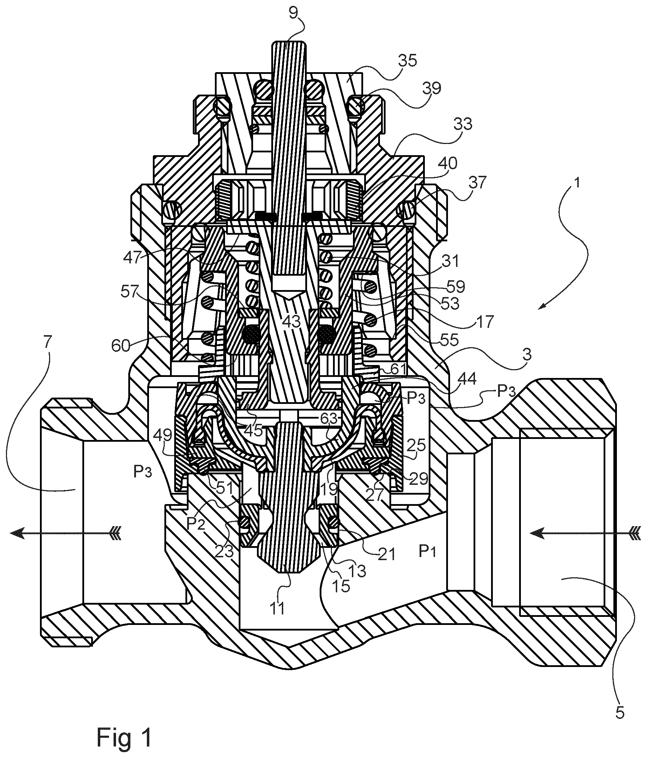

Fig 1 shows in cross section a first example of a control valve 1 according to the present disclosure. The valve comprises a housing 3 which may be made for instance in brass as is well known per se, although other materials are conceivable such as stainless steel, etc. The housing 3 comprises an inlet 5 and an outlet 7 which may be provided with for instance inner and outer threads, respectively, to facilitate connecting to inlet and outlet pipes. Further, the control valve may have a pin 9 as illustrated at the top of the drawing. A thermostat (not shown) may be connected to the housing 3 and control a flow in the valve 1 by influencing the pin 9 as is well known per se.

A first valve arrangement, comprising a first valve member 25 and a first valve seat 27, controls a fluid flow based on a thermostat setting, and a second valve arrangement, comprising a second valve member 11 and a second valve seat 13, regulates the fluid flow based on a fluid pressure difference between the fluid inlet 5 and the fluid outlet 7.

First, it will be shown how a water flow proceeds from the inlet 5 to the outlet 7 of the valve housing 3. Water entering the inlet 5 will be at a first pressure P₁, which may vary depending on the valve's 1 location in the heating system where it is used, as well as other conditions as discussed. This pressure P₁ influences the projecting second valve member 11 which is moveable in relation to the second seat 13 forming a second ring-shaped cut-off area 15 therebetween. The second valve member 11 moves against the force of a helical pressure control spring 17 and its location relative to the second seat 13 will be determined by a differential pressure. P₁ is the pressure sensed by the projecting distal end of the differential valve member 11 and is equal to the pressure at the inlet 5. P₃ is a pressure at a location on the opposite side of a rolling diaphragm 19 to which the second valve member 11 is connected and is approximately equal to the pressure at the outlet 7.

Thus, the second seat 13 is ring-shaped and the second valve member 11 reaches through the second valve seat 13 against the flow direction of the fluid. Thereby, an increase in the fluid pressure differential P₁-P₃ as well as the fluid pressure differential P₂-P₃ causes the second valve member 11 to move in the flow direction of the fluid, backwards compared to how it projects through the seat 13, towards the second valve seat 13 to constrict the fluid flow at a ring-shaped cutoff area 15.

The second valve seat 13 may itself be moveable in relation to an inner bore 21 in the valve housing 3, as will be described, and is sealed against this bore 21 by means of an O-ring 23.

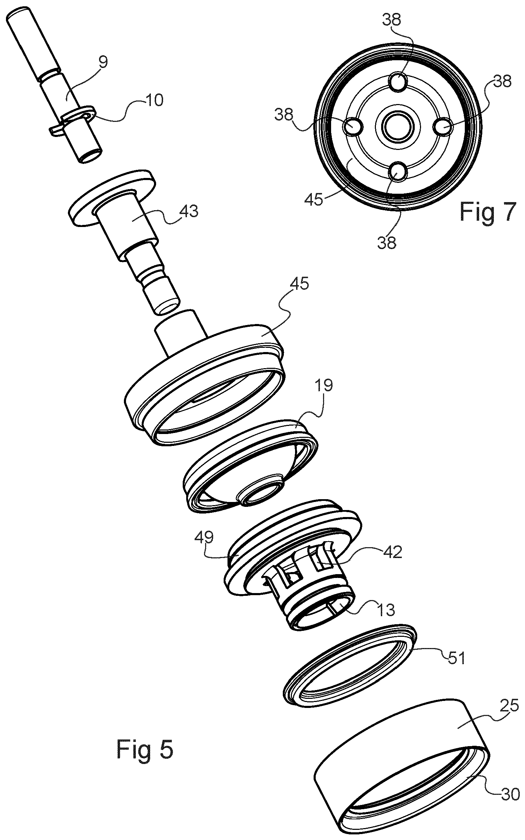

After passing the second ring-shaped cutoff area 15 and openings 42 in the seat (cf. fig 5), the water flow, which may now have a reduced pressure P₂, proceeds to the first valve member 25, which is moveable in relation to a first valve seat 27 which may be formed in the interior of the housing 3. There is thus provided a first ring-shaped cutoff 29 area therebetween that may control the flow in response to a setting provided by a thermostat, the setting being based on the difference between a desired temperature and an actual temperature. This control function however operates on a water flow resulting from a pressure difference P₂-P₃, which may be significantly more constant and predictable than the pressure difference P₁-P₃ over the control valve 1 as a whole.

The first valve member 25 is connected to the aforementioned pin 9 that is controlled by the thermostat (not shown). The thermostat pushes the pin 9 in to shut the flow through the first cutoff area 29, typically if the room is warm enough. This movement is counteracted by a helical return spring 31, which keeps the pin 9 in contact with an adjusting part of the thermostat, as that part recedes when the second cutoff 29 area should be opened.

As seen in the top part of fig 1, an outer insert 33 is fitted inside the valve housing 3, and an inner insert 35 is fitted inside the outer insert 33. An O-ring 37 is located between the housing 3 and the outer insert 33, and another O-ring 39 is located between the inner and outer inserts 33, 35.

The pin 9 and the inner and outer inserts 33, 35, may be roughly concentrically arranged, and several moving parts may be connected to those inserts. It is possible to fit a valve insert assembly comprising all moving parts except the first valve seat to a valve housing 3 of a legacy type, replacing a valve insert that is not capable of differential pressure control.

The pin 9 is slidable in its axial direction in relation to the inner insert 35 and connects to the first valve member 25 via a first 43 and a second 45 connector part, which may be made in a plastic material. The pin 9 is inserted in the first connector part 43 which reaches down towards the first valve member 25 and provides an upper support surface 47 for the helical return spring 31. The second connector part 45 is attached to the first connector part 43 with a snap fit, and provides a lateral displacement, radially outwards from the center axis of the pin 9 to connect to the first valve member 25, which may be ring-shaped.

The present disclosure thus presents a control valve with a concentric arrangement including a first 25, 27 and a second 11, 13 valve arrangement, where the first valve arrangement controls a fluid flow based on a thermostat setting transferred by a pin 9 in the center of the concentric arrangement. The second valve arrangement despite this is centered in the concentric arrangement, surrounded by the first valve arrangement. This may be achieved in different ways but is in this example made possible with the second connector part 45 transferring the axial displacement of the pin 9 radially outwards, and interconnecting piece 63 which as will be shown reaches through the second connector part 45 connecting the radially outwards located pressure control spring 17 to the centered first valve member 11.

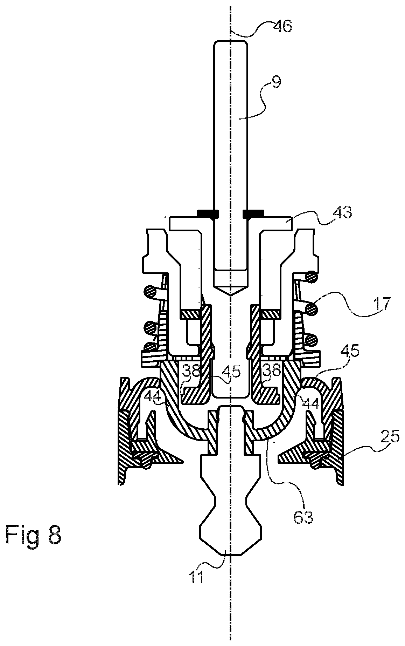

This is specifically illustrated in a cross section in fig 8, where the first 25 and second 11 valve members are concentrically arranged with a center axis 46. The first valve 25 member is controlled by the pin 9 in the center of the concentric arrangement, while surrounding the second valve member 11. The latter is connected to the pressure control spring 17 which surrounds the pin 9. Connector parts 43, 45 connect the pin 9 with the first valve member 25, and an interconnecting piece 63 connects the pressure control spring 17 to the second valve member 11. Either of the connector part 45 and the interconnecting piece 63 reaches through the other. In the illustrated case, a plurality of legs 44, typically three or more, of the interconnecting piece 63 reaches through openings 38 in the connector part 45. However, the reversed relationship could also be possible, where parts of the connector part 45 reaches through the interconnecting piece.

Returning to fig 1, a seat connector 49 is attached to the first valve member 25 and the second connector 45, and a lower portion thereof may comprise the second valve seat 13 or may be assembled therewith. This also means that the second valve seat 13 moves with the pin 9 and the first valve member 25. Thus, the first valve member 25 is connected to the second seat 13, such that a movement of the first valve member 25 that increases the fluid flow causes the second seat 13 to move in a direction also increasing the fluid flow. This compensates to some extent for the increased flow past the second valve member 11 which may drive it towards a more closed position. It also provides a self-cleaning function. In a case where dirt or debris has become stuck in the ring-shaped cutoff 29 formed between the first valve member 25 and the first valve seat 27, the flow will be reduced, the room will become cooler, and the thermostat will respond by increasing the first valve member's distance to the first valve seat 27. Thanks to the second valve seat 13 moving with the first valve member 25, a significant flow can be maintained that can flush the trapped dirt, etc. out of the control valve.

In a case where instead dirt to some extent blocks the second ring-shaped cutoff area 15, the pressure P2 will fall. The area of the rolling diaphragm 19 may be about three times the front area (as seen in the flow direction) of the second valve member 11. This means that the influence of the falling difference P2-P3 is greater than the possibly slightly increasing difference P1-P3, which means that the pressure control spring 17 can open the cut-off area and assist with flushing the dirt or the like out, thereby providing another self-cleaning effect.

The outer part of rolling diaphragm 19 is fitted between the second connector 45 and the seat connector 49. The rolling diaphragm 16 connects the first valve member 25 to the second valve member 11 and seals the area in between them. This allows the second valve member to sense the pressure difference.

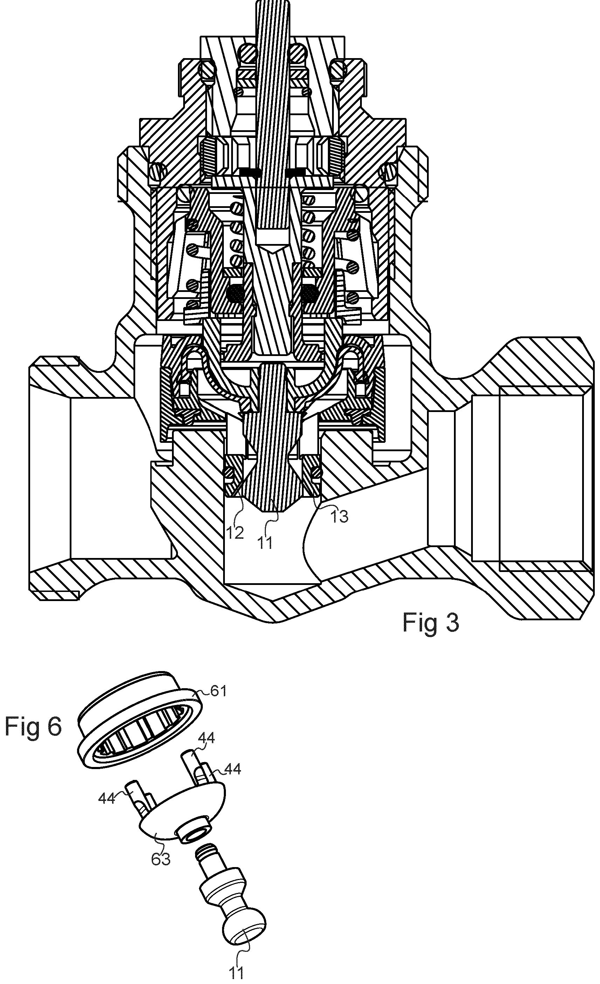

Although the rolling diaphragm 16 is very flexible it also has some spring-like effect. Therefore, a movement of the first valve member 25 that constricts the flow between the first valve member 25 and the first valve seat 27 will bias the second valve member 11 to some extent downwards as illustrated in fig 3, i.e. being urged against a flow direction from the fluid inlet 5 to the fluid outlet 7. This to some extent compensates the second valve member's 11 action against the pressure difference increase resulting from the first valve arrangement 25, 27 becoming more constricted.

The second valve member 11 may be limited in its stroke, so that it if the first valve member 25 moves close to a fully open position, the second valve member 11 touches its end position where the legs 44 of the connecting piece 63 come into contact with a bottom surface 60 of an intermediate member 53. When the first valve member 25 moves further towards the fully open position, the cone of the second valve member 11 can no longer follow the movement of the first valve and will instead be forced to a more opened position by the second seat 13 moving away from the second valve member 11. This will give the valve an additional self-cleaning feature by opening the smallest passages of the control valve and letting trapped dirt be flushed out. Such a big movement of the first valve member can occur when the thermostat connected to the valve senses a big deviance between the room temperature and the set temperature. It can also appear if the thermostat is removed from the valve and the return spring is free to move the first valve member into its end position. At these circumstances the valve is temporarily not working as a differential pressure compensated valve but will return to normal condition as soon as the thermostat is refitted to the control valve or when the thermostat is closer to its set temperature again, for example after having flushed the valve clean from trapped dirt.

The first valve member 11 may be connected to a pressure control spring urging the second valve member towards an open position, such that a movement of the first valve member 25 that increases the fluid flow causes the pressure control spring to become more biased as also a rolling membrane or diaphragm transfer load over to the pressure control spring. This increases the force from the pressure control spring stroke and will make a movement also of the second valve member in a direction to more opened.

Further, a rubber sealing lip 51 may be attached between the first valve member 25 and the seat connector 49. The sealing lip 51 is urged against the first valve seat 27 when the first valve member 25 is in its closed position to reduce any remaining leakage that could otherwise result from manufacturing tolerances etc.

The intermediate piece 53 is fitted inside the outer 33 insert, and rests on a ledge 55 on the inside of the outer insert 33. The intermediate piece 53 provides a lower support surface 57 for the helical return spring 31 as well as a surface 60 that stop the further movement upwards of the second valve member 11 as mentioned.

The pressure control spring 17 is arranged radially outwards of the pin 9 to allow the pin to connect to a thermostat at the center of the concentric insert arrangement. A downward facing surface 59 of the intermediate piece 53 provides an upper support surface for the pressure control spring 17.

A lower support piece 61 provides a lower support surface for the helical pressure control spring 17. An interconnecting piece 63 connects the lower support piece 61 to the second valve member 11 with legs 44 passing through openings in the second connector 45, such that the second valve member 11 can move, depending on the differential pressure P₁-P₃, relatively independently of the first valve member 25, which moves depending on the temperature differential sensed by the thermostat.

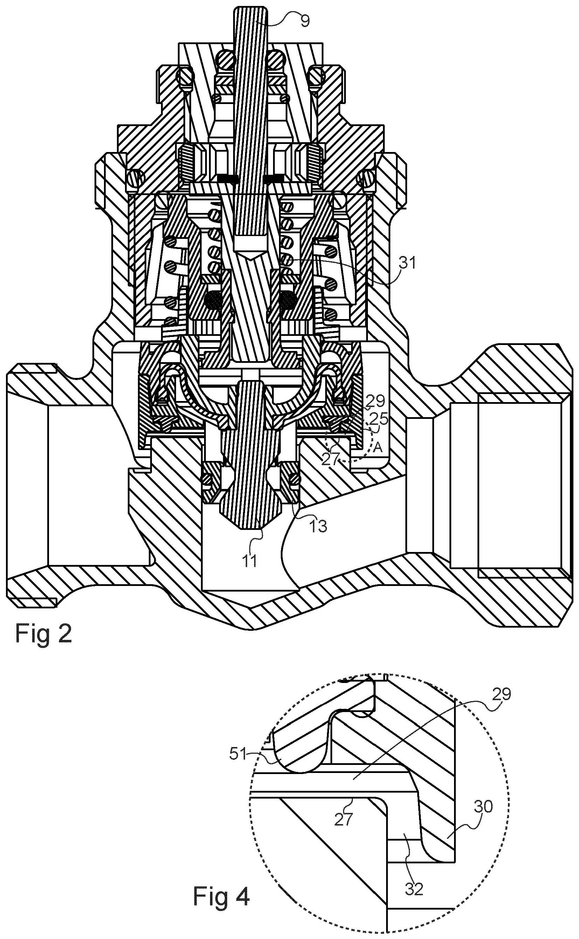

Fig 2 illustrates the corresponding cross section where the temperature-controlled valve arrangement is opened. Typically, this is the result of the room becoming colder. Then, the part of the thermostat acting on the pin 9 recedes, the return spring 31 acts on the pin 9 to follow that movement and the first valve member 25 moves away from the first valve seat 27 to increase the size of the ring-shaped cutoff 29, such that more hot water is lead into a radiator (not shown). The increased flow also acts on the free end of the second valve member 11, but the second valve seat 13 moves with the first valve member 25 to somewhat compensate for this.

An enlarged portion A of fig 2 is shown in fig 4. The first valve member 25 comprises a collar portion 30 which encloses the first valve seat 27 radially outwards. This creates a circular channel 32 with a cross section that may gradually increase as the fluid flows from the ring-shaped cut-off 29. This reduces any sound produced by the pressure gradient as the water flows towards the outlet 7.

Fig 3 illustrates the corresponding cross section where the temperature-controlled valve arrangement remains open, but where the flow is reduced by a pressure differential-controlled valve arrangement. That is, due to an increased pressure drop, the second valve member 11 has restricted the size of the cutoff area 15 such that the flow is less affected by the pressure drop increase. A small leak channel 12 ensures that the second valve arrangement 11, 13 does not close fully. This means that even at a high pressure drop as illustrated, the first valve arrangement 25, 27 can remain in operation. The leak channel 12 may simply be formed as a small groove in the second valve seat 13.

Fig 5 shows a perspective exploded view of the pieces making up the first valve member and the second valve seat. The pin 9 can be inserted in a hole in the top face of the first connector part 43, and in the illustrated case the insertion is limited by a metal washer 10 attached to the pin 9, cf. fig 1. The second connector part 45 is attached to the first 43 by means of a snap fit, and includes openings 38, as shown in fig 7.

The return spring 31, cf. fig 1, urges the first connector part 43 upwards as illustrated in fig 1 and this movement is limited by an adjustment member 40 which is in threaded engagement with the housing 3. This means that the first valve can be preset by using a tool turning the adjustment member 40 thereby moving it upwards or downwards. Specifically, the adjustment member 40 sets to what extent the first valve member 25 can open.

By setting the adjustment member 40 to maximum open, the valve has full access to the self-cleaning ability. Also, by using a smaller than maximum setting, the valve has a self-cleaning ability as described.

In fig 5 there is also shown the rolling diaphragm 19, the inner part of which is to be connected to the second valve member 11. The peripheral edge of the rolling diaphragm 19 is fitted between the second connector 45 and the seat connector 49 by being squeezed therebetween.

As shown, the seat connector 49 is formed in one piece with the second valve seat 13 and includes openings 42 where water can escape towards the first valve arrangement 25, 27 after passing the second valve seat 13.

The ring-shaped sealing lip 51 is attached by being squeezed between a peripheral surface of the seat connector 49 and the first valve member 25, including the collar portion 30.

Fig 6 shows a perspective exploded view of the pieces making up the second valve arrangement. The lower support piece 61 provides a lower support surface for the pressure control spring 17 and is capable of urging the second valve member 11 away from the second valve seat 13 via intermediate parts. An interconnecting piece 63 connects the lower support piece 61 to the second valve member 11 through openings in the second connector 45 (cf. fig 7) where legs 44 of the interconnecting means run. Thereby, the second valve member 11 can move, e.g. downwards as illustrated in fig 1 and in response to a falling pressure differential, without substantially affecting the operation of the first valve member 25.

The second valve member 11 thus has a distal end projecting through the second valve seat 13, and a proximal end attached to the interconnecting piece 63. The second valve arrangement may be closed by moving the second valve member 11 in the direction of its proximal end. The second valve member 11 may be able to pass through the valve seat 13. and when closed, a cylindrical overlap may be formed therebetween only allowing a very small leakage optionally increased by the aforementioned leak channel.

The housing 3, the second valve member 11, the adjustment member 40 and the pin 9 may preferably be metal parts, typically brass. Other parts can be made in a plastic material such as a polyamide-imide, possibly reinforces by e.g. glass fibre.

The present disclosure is not restricted to the above described examples and may be varied and altered in different ways within the scope of the appended claims.

## Claims

1. A control valve for heat regulation comprising a housing (3) with a fluid inlet (5) and a fluid outlet (7), a first valve arrangement, comprising a first valve member (25) and a first valve seat (27), regulating a fluid flow based on a thermostat setting and a second valve arrangement, comprising a second valve member (11) and a second valve seat (13), regulating a fluid flow based on a fluid pressure difference between the fluid inlet and the fluid outlet, wherein the second valve member (11) being biased against a flow direction from the fluid inlet (5) to the fluid outlet (7) by a pressure control spring (17), **characterized in that** the bias of the pressure control spring (17) is changed by a movement of the first valve member (25).

2. Control valve according to claim 1, wherein a movement of the first valve member (25) that constricts the flow between the first valve member (25) and the first valve seat (27) causes less tension on the pressure control spring (17) making the second valve member (11) restrict the flow.

3. Control valve according to claim 1 or 2, wherein a rolling diaphragm (19) connects the first valve member (25) to the second valve member (11).

## Patentansprüche

1. Steuerventil zur Wärmeregulierung, umfassend ein Gehäuse (3) mit einem Fluideinlass (5) und einem Fluidauslass (7), eine erste Ventilanordnung, die ein erstes Ventilglied (25) und einen ersten Ventilsitz (27) umfasst und einen Fluidstrom auf der Grundlage einer Thermostateinstellung reguliert, und eine zweite Ventilanordnung, die ein zweites Ventilglied (11) und einen zweiten Ventilsitz (13) umfasst und eine Fluidstrom auf der Grundlage einer Fluiddruckdifferenz zwischen dem Fluideinlass und dem Fluidauslass reguliert, wobei das zweite Ventilglied (11) durch eine Drucksteuerfeder (17) gegen eine Strömungsrichtung von dem Fluideinlass (5) zu dem Fluidauslass (7) vorgespannt ist, **dadurch gekennzeichnet, dass** die Vorspannung der Drucksteuerfeder (17) durch eine Bewegung des ersten Ventilglieds (25) geändert wird.

2. Steuerventil nach Anspruch 1, wobei eine Bewegung des ersten Ventilglieds (25), die die Strömung zwischen dem ersten Ventilglied (25) und dem ersten Ventilsitz (27) einschränkt, eine geringere Spannung auf die Drucksteuerfeder (17) bewirkt, wodurch veranlasst wird, dass das zweite Ventilglied (11) die Strömung einschränkt.

3. Steuerventil nach Anspruch 1 oder 2, wobei eine Rollmembran (19) das erste Ventilglied (25) mit dem zweiten Ventilglied (11) verbindet.

## Revendications

1. Soupape de commande pour la régulation de la chaleur comprenant un boîtier (3) doté d'une entrée de fluide (5) et d'une sortie de fluide (7), un premier agencement de soupape, comprenant un premier élément de soupape (25) et un premier siège de soupape (27), régulant un écoulement de fluide en fonction d'un réglage de thermostat et un second agencement de soupape, comprenant un second élément de soupape (11) et un second siège de soupape (13), régulant un écoulement de fluide en fonction d'une différence de pression de fluide entre l'entrée de fluide et la sortie de fluide, le second élément de soupape (11) étant sollicité à l'encontre d'une direction d'écoulement de l'entrée de fluide (5) vers la sortie de fluide (7) par un ressort de commande de pression (17), **caractérisée en ce que** la sollicitation du ressort de commande de pression (17) est modifiée par un mouvement du premier élément de soupape (25).

2. Soupape de commande selon la revendication 1, un mouvement du premier élément de soupape (25) qui restreint l'écoulement entre le premier élément de soupape (25) et le premier siège de soupape (27) provoquant moins de tension sur le ressort de commande de pression (17) amenant le second élément de soupape (11) à restreindre l'écoulement.

3. Soupape de commande selon la revendication 1 ou 2, un diaphragme à enroulement (19) reliant le premier élément de soupape (25) au second élément de soupape (11).
